# FASCICULE DE BREVET EUROPEEN

(11) **EP 3 248 843 B1**
(45) Date de publication et mention de la délivrance du brevet: **27.02.2019**
(21) Numéro de dépôt: 17172280.4
(22) Date de dépôt: 22.05.2017
(51) Int. Cl.: B60R 13/02

(54) **STRUCTURE D HABILLAGE A PATTES DE RETENUE EN V POUR UNE OUVERTURE DE PAROI DE GARNITURE D'UN VEHICULE ET ASSEMBLAGE CORRESPONDANT**
VERKLEIDUNGSSTRUKTUR MIT V-FÖRMIGEN HALTEELEMENTEN FÜR EINE ÖFFNUNG EINER EINLAGEWAND EINES FAHRZEUGS, UND ENTSPRECHENDE MONTAGE
LINING STRUCTURE WITH V-SHAPED RETAINING TABS FOR A TRIM WALL OPENING OF A VEHICLE AND CORRESPONDING ASSEMBLY

(30) Priorité: 27.05.2016 FR 1654755
(43) Date de publication de la demande: 29.11.2017
(73) Titulaire: Renault s.a.s, 92100 Boulogne-Billancourt (FR)
(72) Inventeur: BOUILLON, Jean-Charles, 78940 La Queue-lez-Yvelines (FR)

(56) Documents cités:
- EP-A1- 1 170 159
- FR-A1- 2 761 313
- JP-A- 2006 205 928

## Description

L'invention concerne une structure d'habillage pourvue de deux pattes de retenue en V pour une ouverture réalisée dans une paroi de garniture d'un véhicule. L'invention est plus particulièrement adaptée à une paroi de garniture de pavillon de véhicule automobile, mais peut être utilisée pour toute paroi de garniture d'un habitacle de véhicule. L'invention concerne également l'assemblage d'une telle structure d'habillage à une ouverture de paroi de garniture.

Des ouvertures sont souvent réalisées dans des parois de garniture de véhicule, notamment des parois de l'habitacle. De telles ouvertures peuvent servir à la fixation d'éléments internes à l'habitacle, tels que par exemple des crochets de retenue de filet ou autre. Ces ouvertures sont habituellement habillées par une structure d'habillage qui présente une surface maintenue en appui sur une face visible de la paroi de garniture par des languettes de maintien traversant l'orifice et venant en appui contre une face non visible de la paroi de garniture.

Pour des raisons de sécurité, il peut être prévu que la paroi de garniture puisse être déformée en cas de choc. A cet effet, la paroi de garniture peut présenter une pliure, laquelle peut passer par l'ouverture. Un tel agencement peut provoquer l'éjection de la structure d'habillage hors de l'ouverture. Ce risque peut être accru lorsque la déformation de la paroi de garniture est provoquée par le déploiement brusque d'un coussin gonflable (air-bag). Afin d'éviter l'éjection de la structure d'habillage, il est possible de coller les languettes de maintien sur la face non visible de la paroi de garniture. Cette solution présente l'inconvénient d'être couteuse et peu reproductible, le collage étant réalisé manuellement. En outre, ce collage peut ne pas suffire à éviter l'éjection de la structure d'habillage.

Le document EP-A-1170159 décrit une structure d'habillage pour une ouverture de paroi de garniture conforme au préambule de al revendication 1.

Il existe donc un besoin pour une structure d'habillage qui puisse être fixée à une ouverture de paroi de garniture sans risque d'éjection, notamment en cas de déformation de la paroi de garniture, par exemple résultant d'un choc et/ou du déploiement d'un air-bag.

A cet effet, l'objet de l'invention concerne une structure d'habillage pour une ouverture de paroi de garniture comprenant un cadre délimitant un orifice de forme polygonale, le cadre présentant :
- une face plane dont un bord interne entoure l'orifice,
- des languettes de maintien en L présentant chacune :
   o une première partie s'étendant le long d'un côté de l'orifice depuis le bord interne de ladite face plane, sensiblement perpendiculairement à celle-ci, et
   o une deuxième partie reliée à la première partie sensiblement perpendiculairement à celle-ci, s'étendant en regard d'au moins une partie de la face plane,
   o au moins une languette de maintien comportant deux pattes de retenue, la concavité de chaque patte de retenue étant dirigée en direction d'un plan contenant la face plane, chaque patte de retenue présentant un premier bras et un deuxième bras reliés par une extrémité, une extrémité du premier bras non reliée au deuxième bras étant solidaire de la deuxième partie.

Selon l'invention, les deux pattes de retenue sont en V et sont disposées de part et d'autre de la deuxième partie de la languette de maintien suivant une direction sensiblement parallèle au côté de l'orifice le long duquel la languette de maintien s'étend.

Grâce à cet agencement, la structure d'habillage peut être retenue efficacement par une ouverture de paroi de garniture, les extrémités libres des pattes de retenue en V étant situées en regard de la face cachée de la paroi de garniture alors que la face plane est en appui sur la face visible. En outre, la forme en V des pattes de retenue leur confère une certaine élasticité : les bras d'une patte de retenue peuvent être rapprochés l'un de l'autre, permettant par exemple de faciliter leur passage au travers de l'ouverture de la paroi de garniture lors du montage de celle-ci, ou au contraire peuvent s'écarter et améliorer la retenue de la structure d'habillage tout en réduisant les risques de ruptures des pattes de retenue.

Avantageusement, une seule languette de maintien pourvue de pattes de retenue en V peut être suffisante afin d'accrocher la structure d'habillage à une paroi de garniture.

La structure d'assemblage selon l'invention peut en outre comporter une ou plusieurs des caractéristiques suivantes :
- les premiers bras des pattes de retenue en V d'une même languette de maintien sont reliés par une nervure de rigidification, ceci peut permettre d'éviter une désolidarisation des pattes de retenue de la languette de maintien. La nervure de rigidification peut alors s'étendre sensiblement parallèlement à la première partie de la languette de maintien, pour une réalisation plus simple.
- Les deux pattes de retenue en V d'une même languette de maintien sont disposées symétriquement par rapport à un plan médian du cadre, ce plan médian étant perpendiculaire à ladite face plane et passant par le milieu du côté de l'orifice le long duquel s'étend la languette de maintien. Ceci peut favoriser l'accrochage de la structure d'habillage à la paroi de garniture.
- La distance séparant les extrémités libres des deuxièmes bras de deux pattes de retenue en V d'une même languette de maintien est supérieure à la dimension la plus grande du cadre dans un plan contenant la face plane. Ceci peut favoriser l'accrochage de la structure d'habillage à la paroi de garniture.
- Un volet ferme l'orifice délimité par le cadre. Ce volet peut être relié au cadre par une articulation.
- Une unique languette de maintien est pourvue de pattes de retenue en V et les autres languettes de maintien sont montées pivotantes par rapport à la face plane. Ceci peut permettre de faciliter l'assemblage de la structure d'habillage à la paroi de garniture tout en garantissant son accrochage à celle-ci.

L'invention concerne également un assemblage d'une structure d'habillage selon l'invention à une ouverture polygonale de paroi de garniture, cette paroi de garniture présentant une face cachée et une face opposée visible. Selon l'invention, cet assemblage est tel que :
- la face plane du cadre est en appui contre la face visible de la paroi de garniture,
- les premières parties des languettes de maintien s'étendent le long des bords de l'ouverture, au travers de celle-ci,
- les deuxièmes parties des languettes de maintien sont en appui contre la face cachée de la paroi de garniture,
- les pattes de retenue en V s'étendent au moins en partie en regard de la face cachée de la paroi de garniture, de part et d'autre de l'ouverture.

On comprend ainsi que les pattes de retenue en V assurent l'accrochage de la structure d'habillage à la paroi de garniture, même lorsque celle-ci se déforme et que les languettes de maintien n'assurent plus leur fonction de maintien.

Avantageusement, afin de réduire davantage le risque de décrochage de la structure d'habillage, la distance séparant les extrémités libres des deuxièmes bras de deux pattes de retenue en V d'une même languette de maintien peut être supérieure à la dimension la plus grande de l'ouverture de la paroi de garniture.

La paroi de garniture de l'assemblage selon l'invention peut être une paroi de pavillon de véhicule automobile ou encore une paroi de garniture faisant partie d'un habitacle de véhicule lequel peut être terrestre, aérien ou autre.

L'invention concerne également un véhicule, notamment terrestre ou aérien, comprenant un assemblage selon l'invention. En particulier, cet assemblage peut concerner une paroi de garniture d'un habitacle de ce véhicule.

L'invention est maintenant décrite en référence aux dessins annexés, non limitatifs, dans lesquels :
- la figure 1 représente une vue en perspective partielle d'un assemblage d'une structure d'habillage selon un mode de réalisation de l'invention, la structure d'habillage étant assemblée à une ouverture de paroi de garniture dans un état non déformé ;
- la figure 2 représente la paroi de garniture de la figure 1 dans un état déformé ;
- la figure 3 est une vue en perspective de dessous de la structure d'habillage représentée figure 1 ;
- la figure 4 est une représentation schématique partielle de côté de la structure d'habillage représentée sur la figure 2, en cours de montage sur une paroi de garniture représentée en coupe ;
- la figure 5 est une représentation similaire à la figure 3, la structure d'habillage étant montée ;
- la figure 6 est une représentation similaire à la figure 3, la structure d'habillage étant dans un état non monté sur la paroi de garniture mais accroché à celle-ci.

Par sensiblement parallèle ou perpendiculaire, on entend une direction s'écartant d'au plus ±20°, voire d'au plus 10° ou d'au plus 5° d'une direction parallèle, perpendiculaire.

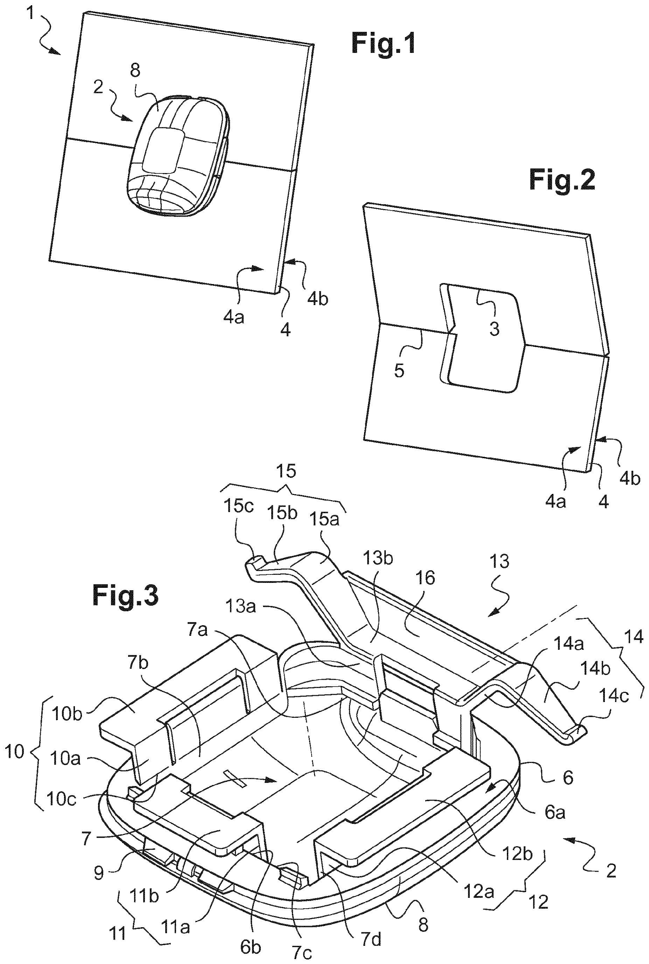

La figure 1 représente un assemblage 1 d'une structure d'habillage 2 à une ouverture 3 de paroi de garniture 4, l'ouverture 3 de cette paroi de garniture est visible sur la figure 2. Sur la figure 1, la paroi de garniture 4 est sensiblement plane, au moins à proximité immédiate de l'ouverture 3, et dans un état non déformé. Il s'agit de son état d'utilisation habituelle. Sur la figure 2, cette paroi 4 est déformée, ici par pliage le long de la ligne 5. Cette paroi de garniture 4 est destinée à faire partie de l'habitacle d'un véhicule terrestre ou aérien, notamment d'un véhicule automobile.

La paroi de garniture 4 présente ainsi une face 4a visible des occupants de l'habitacle et une face opposée 4b cachée aux occupants.

La structure d'habillage 2 est décrite en détail en référence à la figure 3. Elle comprend un cadre 6 délimitant un orifice 7 de forme polygonale, ici en forme de quadrilatère. Cet orifice 7 présente une forme similaire à la forme de l'ouverture 3 de la paroi de garniture 4. Sur la figure 3, l'orifice 7 est obturé par un volet 8. Dans l'exemple, le volet 8 est articulé au cadre 6 via une charnière 9.

Le cadre 6 de la structure d'habillage 2 présente une face plane 6a dont un bord interne 6b entoure l'orifice 7. Ce bord interne 6b forme ainsi les côtés 7a, 7b, 7c, 7d de l'orifice 7, ici au nombre de quatre.

Le cadre 6 est en outre pourvu de languettes de maintien en L 10, 11, 12, 13 présentant chacune :
- une première partie 10a, 11a, 12a, 13a s'étendant le long d'un côté 7a de l'orifice 7, depuis le bord interne 6b de ladite face plane 6a, sensiblement perpendiculairement à celle-ci, et
- une deuxième partie 10b, 11b, 12b, 13b reliée à la première partie sensiblement perpendiculairement à celle-ci, s'étendant en regard d'au moins une partie de la face plane 6a.

Dans le mode de réalisation représenté, trois 10, 11, 12 des languettes de maintien sont montées pivotantes par rapport à la face plane 6a. Plus précisément, elles sont montées pivotantes entre une position de montage dans laquelle leurs premières parties 10a, 11a, 12a s'étendent sensiblement dans le même plan que la face plane 6a et une position d'utilisation dans laquelle leurs premières parties 10a, 11a, 12a sont perpendiculaires à la face plane 6a. A cet effet, elles sont reliées à la face plane 6a par une charnière formée ici d'un film charnière du même matériau polymère que celui formant la structure d'habillage 2, laquelle est de préférence réalisée d'une pièce. Sur les figures 3-6, seules les charnières 10c, 12c sont visibles. Cet agencement permet de faciliter le montage de la structure d'habillage 2 sur la paroi de garniture 4. Il peut en outre être prévu des moyens de blocage des languettes de maintien 10 à 12 dans la position d'utilisation, par exemple sous forme de clips.

Selon l'invention, au moins une languette de maintien, ici la languette de maintien 13, comporte deux pattes de retenue en forme générale de V 14, 15 disposées de part et d'autre de sa deuxième partie 13b suivant une direction sensiblement parallèle au côté 7a de l'orifice 7 le long duquel la languette de maintien 13 s'étend. Chaque patte de retenue en V 14, 15 présente un premier bras 14a, 15a et un deuxième bras 14b, 15b reliés par une extrémité, une extrémité du premier bras non reliée au deuxième bras étant solidaire de la deuxième partie 13b, ici à une extrémité de celle-ci. La concavité de chaque patte de retenue en V 14, 15 est en outre dirigée en direction d'un plan contenant la face plane 6a. De telles pattes de retenue en V 14, 15 présentent l'avantage d'être relativement flexibles (leurs bras pouvant se rapprocher ou s'éloigner), leur permettant d'absorber de l'énergie en cas de choc.

On notera que les pattes de retenue 14, 15 sont agencées sur une seule languette de maintien, ici la languette de maintien 13 opposée au côté du cadre 6 relié au volet 8. Cet agencement peut permettre de faciliter la réalisation, notamment par moulage, et le montage de la structure d'habillage 2, en particulier lorsque le volet 8 est réalisé d'une pièce avec le cadre 6. L'invention n'est toutefois pas limitée à cette réalisation et plusieurs languettes de maintien pourraient être pourvues de pattes de retenue, de préférence des languettes de maintien opposées ou non adjacentes. En outre, le volet 8 pourrait ne pas être articulé au cadre 6 mais simplement clipsé ou emboité sur celui-ci.

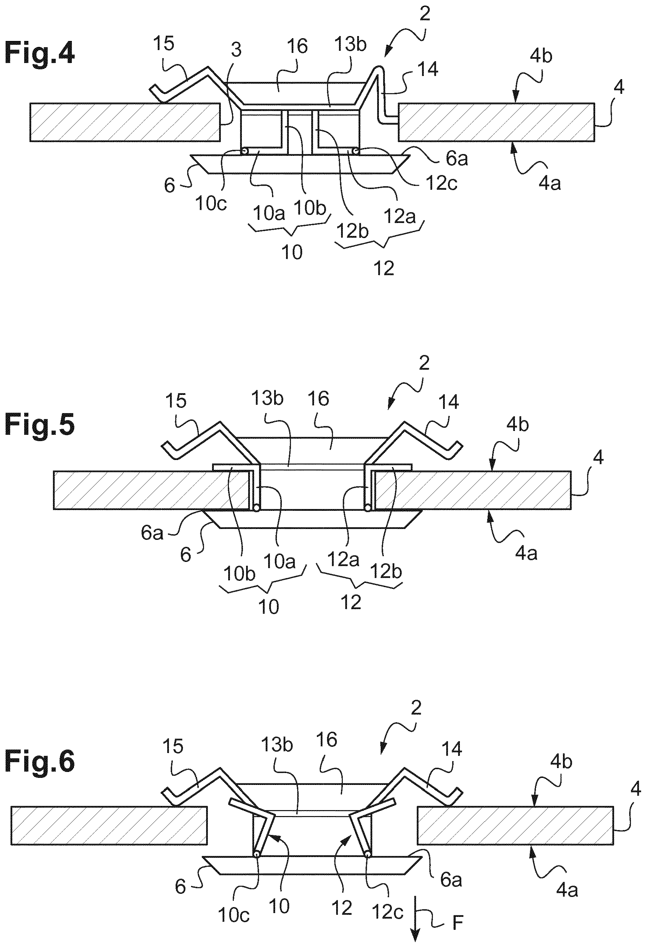

Par ailleurs, la languette de maintien 13 supportant les pattes de retenue 14, 15 est ici fixe, contrairement aux autres languettes de maintien 10, 11, 12 lesquelles sont mobiles. Ceci permet de maintenir les pattes de retenue 14, 15 dans une position optimale par rapport à leur fonction de retenue dans le cas où les languettes de maintien 10 à 12 ne seraient plus en prise avec la paroi de garniture 4, tel que décrit plus bas en référence à la figure 6. On pourrait néanmoins envisager que la languette de maintien 13 soit également montée pivotante sur la face plane 6a.

Afin de renforcer les pattes de retenue 14, 15, les premiers bras 14a, 15a de celles-ci peuvent être reliés par une nervure de rigidification 16. Ici, cette nervure de rigidification 16 s'étend sensiblement parallèlement à la première partie 13a de la languette de maintien 13. Elle est en outre également solidaire de cette première partie 13a, plus une plus grande rigidité de la languette de maintien 13.

Dans le mode de réalisation représenté, les deux pattes de retenue en V 14, 15 sont disposées symétriquement par rapport à un plan médian du cadre 6, ce plan médian étant perpendiculaire à la face plane 6a et passant par le milieu du côté 7a de l'orifice 7 le long duquel s'étend la languette de maintien 13. Cet agencement symétrique permet de favoriser l'accrochage de la structure d'habillage 2 à la paroi de garniture 4, une même longueur de patte de retenue 14, 15 s'étendant de part et d'autre de la structure d'habillage.

Quelque soit l'agencement de la structure d'habillage, la distance séparant les extrémités libres 14c, 15c des deuxièmes bras 14b, 15b des deux pattes de retenue en V est de préférence suffisamment longue pour éviter une extraction de la structure d'habillage 2 hors de l'ouverture 3. A cet effet, cette distance peut être supérieure à la dimension la plus grande du cadre 6 dans le plan de la face plane 6a, ou encore supérieure à la dimension la plus grande de l'orifice 7, ici sa diagonale.

Le montage et l'utilisation de la structure d'habillage 2 sont maintenant décrits en référence aux figures 4 à 6.

Afin de solidariser la structure d'habillage 2 à la paroi de garniture 4, il est nécessaire de faire passer l'ensemble des languettes de maintien 10 à 13 du côté de la face cachée 4b de la paroi de garniture 4 via l'ouverture 3. A cet effet, les languettes de maintien 10 à 12 sont mises dans la position de montage décrites plus haut. Dans cette position, elles s'étendent ainsi au travers de l'orifice 7 de la structure d'habillage (figure 4). La languette de maintien 13 étant fixe, avec les pattes de retenue 14, 15 faisant saillie de chaque côté, elle peut être passée au travers de l'ouverture 3 suivant la diagonale de celle-ci, tel que représenté sur la figure 4, en jouant éventuellement avec la flexibilité des pattes de retenue 14, 15, tel que représenté sur la figure 4 pour la patte de retenue 14. Après passage de l'ouverture 3, la patte de retenue 14 reprend sa forme initiale représentée sur la figure 5.

Une fois les deux pattes de retenue 14, 15 passées au travers de l'ouverture 3, les languettes de maintien 10 à 12 sont pivotées et toutes les premières parties 10a, 11a, 12a, 13a, des languettes de maintien 10-13 sont mises en appui contre la face cachée 4b de la paroi de garniture 4, tel que visible figure 5. A noter que sur cette figure, l'ouverture 3 est vue suivant un de ses côtés, et non plus suivant sa diagonale. Dans cette position, la face plane 6a est en appui contre la face visible 4a et la structure d'habillage 2 est ainsi fixée à la paroi de garniture 4. Sur la figure 5, les pattes de retenue 14, 15 ne sont pas en contact avec la face cachée 4b. L'invention n'est cependant pas limitée à cet agencement particulier et les extrémités libres des pattes 14, 15 pourraient être en appui sur la face cachée 4b.

En cas de survenue d'un choc tendant à éjecter la structure d'habillage 2 hors de l'ouverture 3 suivant la direction de la flèche F de la figure 6, les languettes de maintien 10 à 12 peuvent se casser ou être déplacées et ne plus exercer leur fonction de maintien (fig.6). Les pattes de retenue 14, 15 viennent alors en contact avec la face cachée 4b, ou s'aplatissent si elles étaient déjà en contact avec la face cachée, leurs bras s'écartant l'un de l'autre. On note que même si la structure d'habillage 2 tourne par rapport à sa position initiale et se met en travers de l'ouverture 3, les pattes de retenue 14, 15 sont en appui contre la face cachée 4b (fig.6), accrochant ainsi la structure d'habillage 2 à la paroi de garniture 4 et évitant son éjection. Sur la figure 6, l'ouverture 3 est vue suivant sa diagonale.

L'assemblage obtenu au moyen de la structure d'habillage selon l'invention ne nécessite pas de collage de sorte que le positionnement de la structure d'habillage est indépendant de son montage. Il en résulte un gain de montage et une plus grande reproductibilité du positionnement de la structure d'habillage par rapport à la paroi de garniture. Par ailleurs, quelque soit la déformation de la paroi de garniture, l'élément d'habillage reste accroché à celle-ci grâce à la mise en prise des pattes de retenue en V et de la paroi de garniture. La forme en V de la patte de retenue permet enfin de créer un système d'accrochage souple mais robuste.

## Revendications

1. Structure d'habillage (2) pour une ouverture (3) de paroi de garniture (4) comprenant un cadre (6) délimitant un orifice (7) de forme polygonale, le cadre présentant :
- une face plane (6a) dont un bord interne (6b) entoure l'orifice (7),
- des languettes de maintien en L (10-13) présentant chacune :
∘ une première partie (10a, 11a, 12a, 13a) s'étendant le long d'un côté (7a) de l'orifice (7) depuis le bord interne (6b) de ladite face plane (6a), sensiblement perpendiculairement à celle-ci, et
∘ une deuxième partie (10b, 11b, 12b, 13b) reliée à la première partie (10a, 11a, 12a, 13a) sensiblement perpendiculairement à celle-ci, s'étendant en regard d'au moins une partie de la face plane (6a),
au moins une languette de maintien (13) comportant deux pattes de retenue (14,15), la concavité de chaque patte de retenue (14, 15) étant dirigée en direction d'un plan contenant la face plane (6a), chaque patte de retenue (14, 15) présentant un premier bras (14a, 15a) et un deuxième bras (14b, 15b) reliés par une extrémité, une extrémité du premier bras non reliée au deuxième bras étant solidaire de la deuxième partie (13b).
**caractérisé en ce qu'** les deux pattes de retenue (14, 15) sont en V et sont disposées de part et d'autre de la deuxième partie (13b) de la languette de maintien (13) suivant une direction sensiblement parallèle au côté (7a) de l'orifice (7) le long duquel la languette de maintien s'étend.

2. Structure d'habillage (2) selon la revendication 1, **caractérisée en ce que** les premiers bras (14a, 15a) des pattes de retenue en V d'une même languette de maintien (13) sont reliés par une nervure de rigidification (16).

3. Structure d'habillage (2) selon la revendication 2, **caractérisée en ce que** la nervure de rigidification (16) s'étend sensiblement parallèlement à la première partie (13a) de la languette de maintien.

4. Structure d'habillage (2) selon l'une quelconque des revendications 1 à 3, **caractérisée en ce que** les deux pattes de retenue en V (14, 15) d'une même languette de maintien (13) sont disposées symétriquement par rapport à un plan médian du cadre, ce plan médian étant perpendiculaire à ladite face plane (6a) et passant par le milieu du côté de l'orifice (7) le long duquel s'étend la languette de maintien (13).

5. Structure d'habillage (2) selon l'une quelconque des revendications 1 à 4, **caractérisée en ce que** la distance séparant les extrémités libres (14c, 15c) des deuxièmes bras de deux pattes de retenue en V d'une même languette de maintien est supérieure à la dimension la plus grande du cadre (6) dans un plan contenant la face plane (6).

6. Structure d'habillage (2) selon l'une quelconque des revendications 1 à 5, **caractérisée en ce qu'**elle comprend un volet (8) fermant l'orifice délimité par le cadre (6).

7. Structure d'habillage (2) selon l'une quelconque des revendications 1 à 6, **caractérisée en ce qu'**une unique languette de maintien (13) est pourvue de pattes de retenue en V (14 ; 15) et **en ce que** les autres languettes de maintien (10, 11, 12) sont montées pivotantes par rapport à ladite face plane (6).

8. Assemblage (1) d'une structure d'habillage (2) selon l'une quelconque des revendications 1 à 7 à une ouverture polygonale (3) de paroi de garniture (4), cette paroi de garniture présentant une face cachée (4b) et une face opposée visible (4a), dans lequel :
- la face plane (6a) du cadre (6) est en appui contre la face visible (4a) de la paroi de garniture,
- les premières parties (10a, 11a, 12a, 13a) des languettes de maintien s'étendent le long des bords de l'ouverture (3), au travers de celle-ci,
- les deuxièmes parties (10b, 11b, 12b, 13b) des languettes de maintien sont en appui contre la face cachée (4b) de la paroi de garniture,
- les pattes de retenue en V (14, 15) s'étendent au moins en partie en regard de la face cachée (4b) de la paroi de garniture, de part et d'autre de l'ouverture (3).

9. Assemblage (1) selon la revendication 8, dans lequel la distance séparant les extrémités libres (14c, 15c) des deuxièmes bras de deux pattes de retenue en V d'une même languette de maintien est supérieure à la dimension la plus grande de l'ouverture de la paroi de garniture.

10. Véhicule comprenant un assemblage (1) selon l'une quelconque des revendications 8 ou 9.

## Patentansprüche

1. Verkleidungsstruktur (2) für eine Öffnung (3) einer Einlagewand (4), umfassend einen Rahmen (6), der ein Loch (7) mit einer polygonalen Form begrenzt, wobei der Rahmen aufweist:
- eine ebene Fläche (6a), deren innerer Rand (6b) das Loch (7) umgibt,
- L-förmige Haltelaschen (10-13), die jeweils aufweisen:
∘ einen ersten Abschnitt (10a, 11a, 12a, 13a), der sich entlang einer Seite (7a) des Lochs (7) von dem Innenrand (6b) der ebenen Fläche (6a) im Wesentlichen senkrecht dazu erstreckt, und
∘ einen zweiten Abschnitt (10b, 11b, 12b, 13b), der mit dem ersten Abschnitt (10a, 11a, 12a, 13a) im Wesentlichen senkrecht zu diesem verbunden ist, der sich gegenüber mindestens einem Abschnitt der ebenen Fläche (6a) erstreckt,
**dadurch gekennzeichnet, dass** mindestens eine Haltelasche (13) zwei V-förmige Halteelemente (14, 15) umfasst, die auf beiden Seiten ihres zweiten Abschnitts (13b) in einer im Wesentlichen parallel zur Seite (7a) des Lochs (7) verlaufenden Richtung entlang der sich die Haltelasche erstreckt, angeordnet sind, wobei die Konkavität jedes V-förmigen Halteelements (14, 15) zu einer Ebene ausgerichtet ist, die die ebene Fläche (6a) enthält, wobei jedes V-förmige Halteelement (14, 15) einen ersten Arm (14a, 15a) und einen zweiten Arm (14b, 15b) aufweist, die über ein Ende verbunden sind, wobei ein Ende des ersten Arms, das nicht mit dem zweiten Arm verbunden ist, fest mit dem zweiten Abschnitt (13b) verbunden ist.

2. Verkleidungsstruktur (2) nach Anspruch 1, **dadurch gekennzeichnet, dass** die ersten Arme (14a, 15a) der V-förmigen Halteelemente derselben Haltelasche (13) durch eine Versteifungsrippe (16) verbunden sind.

3. Verkleidungsstruktur (2) nach Anspruch 2, **dadurch gekennzeichnet, dass** sich die Versteifungsrippe (16) im Wesentlichen parallel zum ersten Abschnitt (13a) der Haltelasche erstreckt.

4. Verkleidungsstruktur (2) nach einem der Ansprüche 1 bis 3, **dadurch gekennzeichnet, dass** die beiden V-förmigen Halteelemente (14, 15) derselben Haltelasche (13) in Bezug auf eine Mittelebene des Rahmens symmetrisch angeordnet sind, wobei diese Mittelebene senkrecht zu der ebenen Fläche (6a) ist und durch die Mitte der Seite des Lochs (7) hindurchgeht, entlang der sich die Haltelasche (13) erstreckt.

5. Verkleidungsstruktur (2) nach einem der Ansprüche 1 bis 4, **dadurch gekennzeichnet, dass** der Abstand, der die freien Enden (14c, 15c) der zweiten Arme der zwei V-förmigen Halteelemente derselben Haltelasche trennt, größer ist als die größte Abmessung des Rahmens (6) in einer Ebene, die die ebene Fläche (6) enthält.

6. Verkleidungsstruktur (2) nach einem der Ansprüche 1 bis 5, **dadurch gekennzeichnet, dass** sie eine Klappe (8) umfasst, die das durch den Rahmen (6) begrenzte Loch verschließt.

7. Verkleidungsstruktur (2) nach einem der Ansprüche 1 bis 6, **dadurch gekennzeichnet, dass** eine einzige Haltelasche (13) mit V-förmigen Halteelementen (14; 15) versehen ist und dadurch, dass die anderen Haltelaschen (10, 11, 12) in Bezug auf die ebene Fläche (6) schwenkbar montiert sind.

8. Anordnung (1) einer Verkleidungsstruktur (2) nach einem der Ansprüche 1 bis 7 an einer polygonalen Öffnung (3) der Einlagewand (4), wobei diese Einlagewand eine verborgene Fläche (4b) und eine gegenüberliegende sichtbare Fläche (4a) aufweist, wobei:
- die ebene Fläche (6a) des Rahmens (6) an der sichtbaren Fläche (4a) der Einlagewand anliegt,
- wobei sich die ersten Abschnitte (10a, 11a, 12a, 13a) der Haltelaschen entlang der Ränder der Öffnung (3) durch diese hindurch erstrecken,
- wobei die zweiten Abschnitte (10b, 11b, 12b, 13b) der Haltelaschen an der verborgenen Fläche (4b) der Einlagewand anliegen,
- wobei sich die V-förmigen Halteelemente (14, 15) auf beiden Seiten der Öffnung (3) mindestens teilweise gegenüber der verborgenen Fläche (4b) der Einlagewand erstrecken.

9. Anordnung (1) nach Anspruch 8, wobei der Abstand, der die freien Enden (14c, 15c) der zweiten Arme der zwei V-förmigen Halteelemente derselben Haltelasche trennt, größer ist als die größte Abmessung der Öffnung der Einlagewand.

10. Fahrzeug, umfassend eine Anordnung (1) nach einem der Ansprüche 8 oder 9.

## Claims

1. Lining structure (2) for an opening (3) of a trim wall (4) comprising a frame (6) delimiting an orifice (7) of polygonal form, the frame having:
- a planar face (6a) of which an inner edge (6b) surrounds the orifice (7),
- L-shaped holding tongues (10-13) each having:
∘ a first part (10a, 11a, 12a, 13a) extending along a side (7a) of the orifice (7) from the inner edge (6b) of said planar face (6a), substantially at right angles thereto, and
∘ a second part (10b, 11b, 12b, 13b) linked to the first part (10a, 11a, 12a, 13a) substantially at right angles thereto, extending facing at least a part of the planar face (6a),
**characterized in that** at least one holding tongue (13) comprises two V-shaped retaining tabs (14, 15) arranged on either side of its second part (13b) in a direction substantially parallel to the side (7a) of the orifice (7) along which the holding tongue extends, the concavity of each V-shaped retaining tab (14, 15) being directed towards a plane containing the planar face (6a), each V-shaped retaining tab (14, 15) having a first arm (14a, 15a) and a second arm (14b, 15b) that are linked by an end, an end of the first arm not linked to the second arm being secured to the second part (13b).

2. Lining structure (2) according to Claim 1, **characterized in that** the first arms (14a, 15a) of the V-shaped retaining tab of one and the same holding tongue (13) are linked by a stiffening rib (16) .

3. Lining structure (2) according to Claim 2, **characterized in that** the stiffening rib (16) extends substantially parallel to the first part (13a) of the holding tongue.

4. Lining structure (2) according to any one of Claims 1 to 3, **characterized in that** the two V-shaped retaining tabs (14, 15) of one and the same holding tongue (13) are arranged symmetrically relative to a median plane of the frame, this median plane being at right angles to said planar face (6a) and passing through the middle of the side of the orifice (7) along which the holding tongue (13) extends.

5. Lining structure (2) according to any one of Claims 1 to 4, **characterized in that** the distance separating the free ends (14c, 15c) of the two arms of two V-shaped retaining tabs of one and the same holding tongue is greater than the greatest dimension of the frame (6) in a plane containing the planar face (6).

6. Lining structure (2) according to any one of Claims 1 to 5, **characterized in that** it comprises a flap (8) closing the orifice delimited by the frame (6).

7. Lining structure (2) according to any one of Claims 1 to 6, **characterized in that** a single holding tongue (13) is provided with V-shaped retaining tabs (14; 15) and **in that** the other holding tongues (10, 11, 12) are mounted to pivot relative to said planar face (6).

8. Assembly (1) of a lining structure (2) according to any one of Claims 1 to 7 with a polygonal opening (3) of a trim wall (4), this trim wall having a concealed face (4b) and a visible opposite face (4a), in which:
- the planar face (6a) of the frame (6) bears against the visible face (4a) of the trim wall,
- the first parts (10a, 11a, 12a, 13a) of the holding tongues extend along edges of the opening (3), through the latter,
- the second parts (10b, 11b, 12b, 13b) of the holding tongues bear against the concealed face (4b) of the trim wall,
- the V-shaped retaining tabs (14, 15) extend at least partly facing the concealed face (4b) of the trim wall, on either side of the opening (3) .

9. Assembly (1) according to Claim 8, in which the distance separating the free ends (14c, 15c) of the second arms of two V-shaped retaining tabs of one and the same holding tongue is greater than the greatest dimension of the opening of the trim wall.

10. Vehicle comprising an assembly (1) according to either one of Claims 8 and 9.
